# EUROPÄISCHE PATENTSCHRIFT

(11) **EP 0 742 068 B1**
(45) Veröffentlichungstag und Bekanntmachung des Hinweises auf die Patenterteilung: **20.10.1999**
(21) Anmeldenummer: 96106004.3
(22) Anmeldetag: 16.04.1996
(51) Int. Cl.: B23H 7/06, B23H 7/04, B23H 7/16

(54) **Verfahren zum funkenerosiven Feinbearbeiten mittels drahtförmiger Elektrode und hierfür ausgelegte Funkenerosionsmaschine**
Method for wire electrode finish machining and electroerosion machine adapted for the method
Méthode d'usinage de finition avec électrode filiforme et machine d'usinage par électroérosion

(30) Priorität: 09.05.1995 DE 19516990
(43) Veröffentlichungstag der Anmeldung: 13.11.1996
(73) Patentinhaber: AGIE SA, 6616 Losone (CH)
(72) Erfinder: Bühler, Ernst, 6616 Losone (CH); Boccadoro, Marco, 6653 Verscio (CH); Locati, Pierangelo, 28052 Canobbio (IT); Gironi, Adriano, 28044 Verbania (IT); Angelella, Stefano, 6616 Losone (CH); Mazzolini, Livio, 6946 Ponte Capriasca (CH)
(74) Vertreter: von Samson-Himmelstjerna, Friedrich R., Dipl.-Phys.

(56) Entgegenhaltungen:
- EP-A- 0 558 757
- EP-A- 0 578 018
- DE-C- 3 817 302
- US-A- 4 733 040
- PATENT ABSTRACTS OF JAPAN vol. 017, no. 096 (M-1372), 25.Februar 1993 & JP 04 289026 A (FANUC LTD), 14.Oktober 1992,

## Beschreibung

Die Erfindung betrifft ein Verfahren und eine Funkenerosionsmaschine zum funkenerosiven Nachschneiden, d.h. Feinbearbeiten eines Werkstückes mittels einer drahtförmigen Elektrode, bei welchem bzw. in welcher ständig mindestens ein Spaltparameter zur Erkennung einer Kurzschlußsituation überwacht wird.

Es ist bekannt, die Formtreue und Oberflächenqualität von Werkstücken nach dem Vollschnitt durch ein- oder mehrmaliges Nachschneiden mit immer energieschwächeren Impulsen bedeutend zu verbessern. Üblicherweise wird die Kontur mit jeweils geeigneten Zustellungen (Offsets) mehrmals nachgefahren, wobei unterhalb einer vorgegebenen Impulsenergie-Grenze meistens mit konstanter Vorschubgeschwindigkeit gefahren wird.

Bei Prozeßstörungen durch Kurzschlüsse ergibt sich dabei das Problem, daß durch einen "Nichtabtrag" Riefen in Form von Erhebungen auf dem Werkstück erzeugt werden. Je nach Kurzschlußdauer können diese Erhebungen unsichtbar (kleiner als etwa o, 4 µm) sein, aber auch bis zu mehreren Mikrometern groß werden, was sehr störend ist.

Es wurde bereits versucht, im Kurzschlußfall die Drahtelektrode bis zur Aufhebung des Kurzschlusses rückwärts zu bewegen, um anschließend wieder vorwärts weiterzuerodieren.

Weiter ist bekannt, einen Kurzschluß durch joulsche Erwärmung mit Impulsen erhöhter Energie aufzuschmelzen bzw. aufzubrechen (US-PS 3 671 705 - RAZNITSYN).

Aus der senkerosiven Bearbeitung ist es bekannt, die Elektrode bei einem Kurzschluß nicht auf der ausgeführten Vorschubbahn zurückzuziehen, sondern auf eine vorberechnete Fluchtbahn auszuweichen (DE 38 17 302-C - AGIE und US-PS 4 733 040 - AGIE).

Eine abgewandelte Form dieses Verfahren ist auch für das Drahtschneiden vorgeschlagen worden (JP-0S 4-289026 - FANUC und EP-0 578 018-A1 - AGIE). Dabei werden Quer-Servobewegungen verwendet.

Schließlich befaßt sich auch die EP O 558 757 A1 - FANUC mit dem Problem der Kurzschlußbefreiung.

Die bekannten Lösungen sind in mehrfacher Hinsicht nicht befriedigend.

Die heute für das Nach- oder Feinschneiden verwendeten hochfrequenten Schlichtimpulse haben die Eigenschaft, über einen großen Bereich, nämlich eine Spaltweite von mehreren Mikrometern erosionswirksam zu sein. Dies wird häufig als impulsgegebene Spaltweite verstanden. Dem ist jedoch nicht so. Vielmehr wird die Drahtelektrode durch elektrodymanische Kräfte so zum Werkstück hin verlagert, daß Entladebedingungen über einen weiten Bereich aufrechterhalten bleiben.

Aufgrund dieses Effektes wird - nach einer durch Rückwärtsbewegung erzielten Kurzschlußbeseitigung und sich daran anschließender Vorschubbewegung - die Zone der Rückwärtsstrecke nochmals erodiert. Dies erzeugt bedeutende Fehler in Form von vertieften Rillen. Im übrigen ist diese Art der Kurzschlußbeseitigung auch wenig wirkungsvoll und führt zu Servo-Instabilitäten.

Die energiereichen Impulse zum Aufschmelzen oder Aufbrechen eines Kurzschlusses (Kurzschlußbrechimpulse) nach der og US-PS 3 671 705 sind zwar wirkungsvoller. Werden diese jedoch zur Beseitigung von Kurzschlüssen beim Feinbearbeiten eingesetzt, erzeugen sie in der schon erodierten Fläche unweigerlich störende Krater von 50 µm Durchmesser und mehr. Ein Aufschmelzen der Kurzschlußbrücken ist nämlich nur mit Stromimpulsen von deutlich mehr als 20 A möglich. Damit ist diese Methode für das Feinbearbeiten nicht anwendbar, zumindest nicht in der vorbeschriebenen Weise.

Die Fluchtstrategien der Senkerosion und die beim Drahtschneiden verwendeten Quer-Servobewegungen lösen das Kurzschlußproblem auch nur teilweise. In den meisten Fällen werden nämlich die Feinbearbeitungsschnitte ausgeführt, ohne vorher das Abfallstück zu entfernen. Damit bleibt zu wenig Raum, um Kurzschlüsse effizient aufzutrennen, ohne dabei einen neuen Kurzschluß mit dem Abfallstück zu erzeugen. Noch vorhandene Konturfehler können eine Quer-Servobewegung weiter einschränken, speziell in scharfen Ecken, z.B. in der Ecke nach der Einfahrstrecke, d.h. der Strecke, welche von der Startbohrung zur Schnittkontur führt. Wenn der Kurzschluß nicht aufgetrennt werden kann, bleibt das Servosystem dauernd blockiert.

Entgegen den Erwartungen können Kurzschlüsse beim Feinbearbeiten sehr hartnäckig sein. Man hat z.B. festgestellt, daß ferromagnetisches Material mit Komponenten, wie Eisen, Nickel oder Kobalt, bevorzugt im Schnittspalt abgelagert wird. Dies hat damit zu tun, daß der Schnitt im Werkstück vorhandene Magnetfelder stört, nach außen umleitet und hierdurch die magnetisierbaren Schwebepartikel in den Schnittspalt zieht. Die bekannten Verfahren können auch dieses Problem nicht lösen.

Die Erfindung zielt darauf ab, Kurzschlüsse beim funkenerosiven Feinbearbeiten effizient zu beseitigen.

Diese Aufgabe wird durch die Gegenstände der Patentansprüche 1 und 21 gelöst.

Gemäß Anspruch 1 wird die Aufgabe also durch ein Verfahren zum funkenerosiven Nachschneiden (Feinbearbeiten) eines Werkstückes mittels drahtförmiger Elektrode gelöst, bei welchem
a) ständig mindestens ein Spaltparameter zur Erkennung einer Kurzschlußsituation überwacht wird;
b) bei Erkennen eines Kurzschlusses die Vorschubbewegung der Elektrode im Kurzschlußpunkt angehalten wird;
c) bei Fortdauern des Kurzschlusses die Elektrode quer zur Nachschnittbahn vom Werkstück weg bis zu einem Maßnahmenpunkt bewegt wird;
d) im Maßnahmenpunkt eine oder mehrere Maßnahmen zur Kurzschlußbefreiung ein- oder mehrmals durchgeführt werden; und
e) bei Feststellen einer Kurzschlußbefreiung die Elektrode wieder zum Kurzschlußpunkt zurückbewegt und die normale Bearbeitung fortgeführt wird.

Gemäß Anspruch 21 wird die Aufgabe also durch eine Funkenerosionsmaschine zum funkenerosiven Nachschneiden (Feinbearbeiten) eines Werkstückes mittels einer drahtförmigen Elektrode gelöst, die aufweist:
a) Mittel zum ständigen Überwachen mindestens eines Spaltparameters zur Erkennung einer Kurzschlußsituation, und
b) eine mit den Überwachungsmitteln verbundene Steuerung, die derart ausgelegt ist, daß sie
   b.1) bei Erhalt eines einen Kurzschluß anzeigenden Ausgangssignals der Überwachungsmittel die Vorschubbewegung der Elektrode im Kurzschlußpunkt anhält;
   b.2) bei Fortdauern des Kurzschlusses die Elektrode quer zur Nachschnittbahn vom Werkstück weg bis zu einem Maßnahmenpunkt bewegt;
   b.3) im Maßnahmenpunkt eine odere mehrere Maßnahmen zur Kurzschlußbefreiung ein- oder mehrmals durchführt; und
   b.4) nach Erhalt eines eine Kurzschlußbefreiung anzeigenden Signales die Elektrode wieder zum Kurzschlußpunkt zurückführt und die normale Bearbeitung fortführt.

Die Erfindung hat insbesondere folgende Vorteile: der Erosionsprozeß verhält sich gegenüber Störeinflüssen toleranter. Damit wird die Prozeßstabilität erhöht. Zusätzlich wird die Werkstückoberfläche trotz Kurzschluß-Interventionen nicht geschädigt. Auch selbsttätige Interventionen bei Kurzschlüssen sowie eine selbsttätige Optimierung der Interventions-Maßnahmen werden möglich. Insgesamt wird die Qualität der Feinbearbeitung deutlich verbessert, ohne die Investitionskosten zu erhöhen oder die Bedienung der Anlage zu erschweren.

Weiterausbildungen der Erfindung sind in den Unteransprüchen angegeben.

Nachfolgend wird die Erfindung anhand von Ausführungsbeispielen und der beigefügten Zeichnung noch weiter beschrieben.

In der Zeichnung zeigen:
- Fig. 1: eine Kurzschlußsituation beim erfindungsgemäßen Verfahren;
- Fig. 2: den bekannten erzeugten Fehler infolge "Nichtabtrags" bei konstanter Vorschubgeschwindigkeit;
- Fig. 3: den bekannten erzeugten Fehler infolge "Doppelabtrags" bei einer Servo-Rückwärtsbewegung; und
- Fig. 4: eine bekannte Situation mit im Schnittspalt magnetisch festsitzenden Partikeln, in welcher Quer-Servobewegungen den Kurzschluß nicht befreien können.

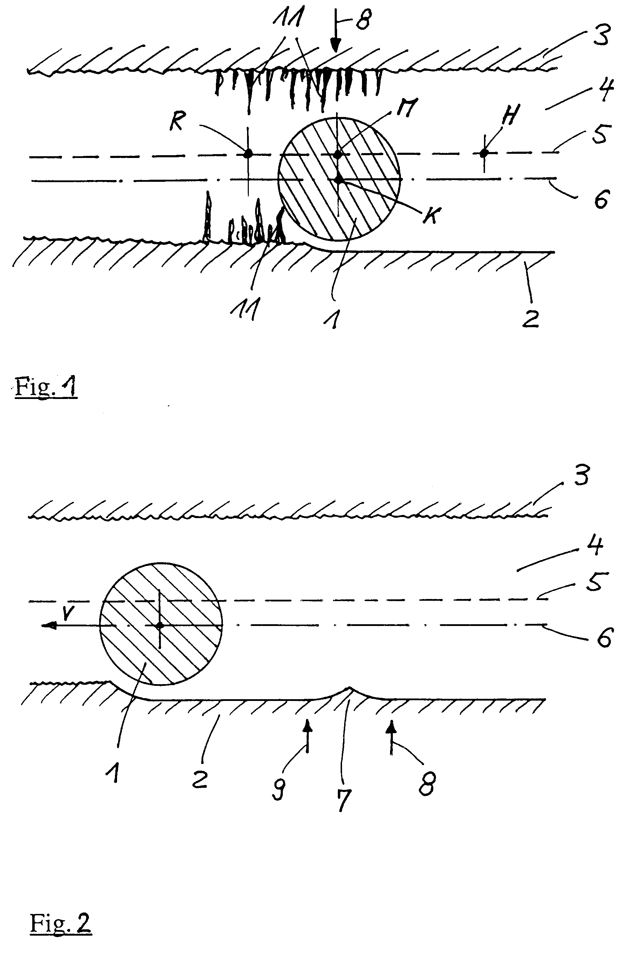

Zum besseren Verständnis der Erfindung wird zunächst der in den Figuren 2 bis 4 dargestellte Stand der Technik erläutert.

Fig. 2 zeigt einen stark vergrößerten und überzeichneten Querschnitt durch die Erosionszone. Hier wird für einen ersten Nachschnitt die Drahtelektrode 1 mit konstanter Vorschubgeschwindigkeit V auf einer um die Zustellung (Offset) von der Vollschnittbahn 5 abweichenden Nachschnittbahn 6 bewegt. Das Abfallstück 3 wurde nach dem Vollschnitt nicht entfernt, was durchaus üblich ist. Die Oberfläche des Werkstückes 2 wird durch den Nachschnitt, dank der generell feineren Einstellungen, verfeinert und auf eine höhere Formtreue gebracht. Im Schnittspalt 4 befinden sich ein Spülmittel, normalerweise deionisiertes Wasser, aber auch kleine Partikel, welche vom Materialabtrag des Werkstücks 2 und der Drahtelektrode 1 herrühren; ferner Zersetzungsprodukte des spülmittels in Gasblasenform, sowie Luftblasen, welche durch den Spülstrom eingetragen werden.

Es sei nun angenommen, daß ein Kurzschluß auftritt und infolgedessen vom Beginn 8 bis zum spontanen Ende 9 des Kurzschlusses keine Erosion mehr stattfindet. Damit wird ein "Nichtabtrag 7" in Form einer vorstehenden Riefe über die ganze Werkstückhöhe erzeugt. Solche Fehler sind äußerst unerwünscht, da sie auch mit weiteren Nachschnitten, wegen der kurzen Eingriffszeit, kaum ausgeglättet werden können. Diese Riefen sind umso besser sichtbar, je feiner die erzeugte Oberfläche ist. Eine kritische Kurzschlußdauer, ab welcher Riefen mit bloßem Auge sichtbar werden, liegt bei diesem Beispiel um etwa 400 ms.

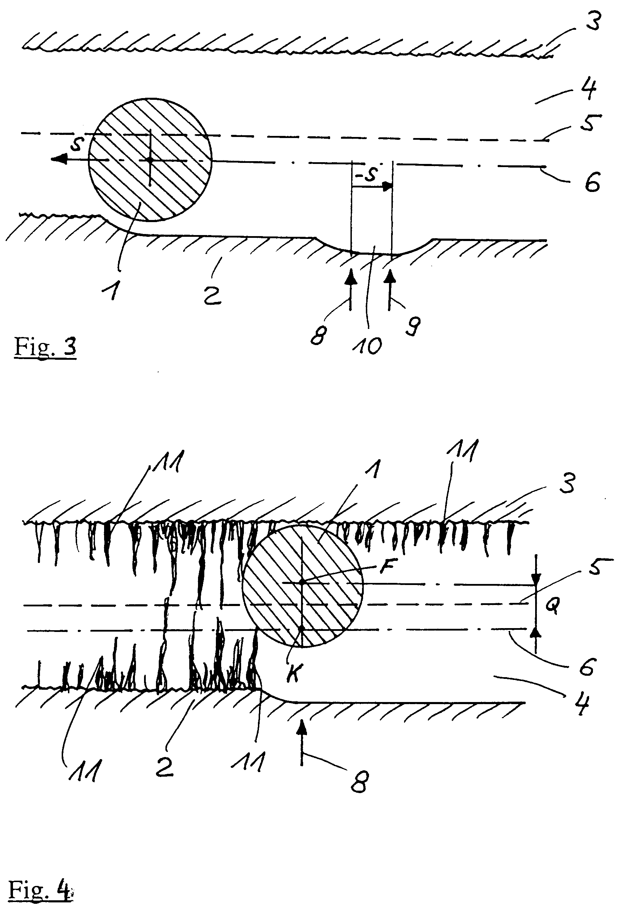

Gute Servosysteme können durchaus innerhalb der vorgenannten Zeitspanne von 400 ms reagieren. Deshalb wendet man zur Lösung des og. Problems auch das Prinzip nach Fig. 3 an. Die Drahtelektrode 1 wird hier mit einer geführten Servogeschwindigkeit S auf der Nachschnittbahn 6 bewegt. Dazu wird ein Spaltparameter, z. B. die mittlere Arbeitsspannung, gemessen und mit einem Sollwert verglichen. Das Vergleichsresultat wird einem speziellen Geschwindigkeitsregler zugeführt, welcher seinerseits die Servogeschwindigkeit S den Achsenantrieben vorgibt. Im Falle einer Kurzschlußdetektion gibt der Gewschwindigkeitsregler eine Servorückwärtsgeschwindigkeit - S aus. Damit wird die Drahtelektrode 1 zwischen dem Kurzschlußbeginn 8 und dem Kurzschlußende 9 rückwärts bewegt. Beim erneuten Vorschub wird der Doppelabtrag 10 verursacht, und zwar in Form einer Rille, welche wiederum über die ganze Werksstückhöhe verläuft. Die Nachteile sind grundsätzlich dieselben wie bei dem Verfahren nach Fig. 1. Adaptive Eingriffe auf die Generatorimpulse oder die Vorschubgeschwindigkeit in dieser Zone führen nicht zum Ziel, da dabei die Bearbeitungsstabilität verloren geht.

Die in Fig. 4 dargestellten Verhältnisse im Schnittspalt 4 erinnern an eine Tropfsteinhöhle und können durchaus bei einem schlecht entmagnetisierten Stahlwerkstück auftreten. Die Magnetfelder werden gewöhnlich durch magnetische Spannvorrichtungen bei einem vorhergehenden Schleifprozeß in das Werkstück eingebracht und können selbst mit guten Entmagnetisiergeräten nur oberflächlich eliminiert werden. Dies hat zur Folge, daß magnetisierte Partikel 11 sich sowohl am Abfallstück 3 als auch am Werkstück 2 anlagern. Dabei richten sich diese Partikel 11 in Richtung der Feldlinien aus und können den Schnittspalt 4 überbrücken. Der für die Nachschnitte üblicherweise verwendete Spüldruck von nur etwa 0.5 bar, ist zu schwach, um die magnetischen Partikel 11 aus der Arbeitszone zu entfernen.

Ersichtlich versagen die bekannten Verfahren mit Quer-Servobewegungen in einer solchen Situation. Bei Kurzschlußbeginn 8 kann sich die im Kurzschlußpunkt K befindliche Drahtelektrode 1 nämlich höchstens über die Quer-Servostrecke Q bis zum Fluchtpunkt F bewegen. Der Kurzschluß wird dabei regelmäßig nicht befreit, was dann unweigerlich eine Dauerunterbrechung der Bearbeitung auslöst.

Fig. 1 illustriert die Verhältnisse beim erfindungsgemäßen Verfahren. Bei Kurzschlußbeginn 8 wird die Drahtelektrode 1, vorerst im Kurzschlußpunkt K angehalten - ungeachtet ob sie mit konstanter Vorschußgeschwindigkeit V oder mit einer Servogeschwindigkeit S vorwärts bewegt wurde. Anschließend wird die Drahtelektrode 1 vom Werkstück 2 weg zu einem Maßnahmenpunkt M bewegt, welcher vorzugsweise auf der Vollschnittbahn 5 liegt. Im Maßnahmenpunkt M kann man nun viel massivere Maßnahmen ergreifen kann, um den Kurzschluß ohne Beschädigung des Werkstücks 2 zu befreien. Untersuchungen haben beispielsweise gezeigt, daß selbst Kurzschluß-Brechimpulse von 400 A Amplitude und 3 µs Dauer nicht die geringsten Spuren auf der nachgeschnittenen Oberfläche hinterließen, sofern sie im Maßnahmenpunkt M ausgelöst wurden. Zusätzlich stellte man fest, daß solche Impulse oft nur bis zu einer Amplitude von etwa 100 A ansteigen und nachfolgend in einen Leerlaufimpuls übergehen - ein Beweis für die Effizienz dieses Prinzips der Kurzschlußunterbrechung.

Sobald eine Unterbrechung des Kurzschlusses festgestellt wird, kann - selbstverständlich in jeder Phase dieses Verfahrens - sofort zum Kurzschlußpunkt K zurückgefahren werden, um dort die normale Bearbeitung fortzuführen.

Bekanntlich kann es beim Nachschneiden extrem schwierig sein, Kurzschlüsse ohne Schädigung des Werkstückes 2 zu beseitigen. Die Kurzschlüsse treten nämlich meistens stochastisch und ohne die geringsten Vorzeichen auf. Bekannte adaptive Regelsysteme sind mangels signifikanter Eingangsgrößen völlig überfordert.

Untersuchungen haben gezeigt, daß es mehrere Ursachen für diese Kurzschlüsse gibt und jede Ursache ihr charakteristisches Erscheinungsbild hat. So treten Kurzschlüsse infolge Ablagerung magnetischer Partikel 11 nur bei der Bearbeitung ferromagnetischer Werkstoffe auf, wie Werkzeugstahl, gewisse Nickellegierungen und Hartmetalle mit Kobaltbindephase. Typische Kurzschlußdauern liegen zwischen 100 ms und mehreren Sekunden. Eine Kurzschlußbefreiung geschieht am erfolgreichsten mit Spülimpulsen, Kurzschluß-Brechimpulsen und Reinigungsbewegungen zum Reinigungspunkt R der Drahtelektrode 1. Mangelhafte Drahtqualität wie Schuppenbelag, Quetschungen oder Verbiegungen äußern sich in einer Kurzschlußdauer, welche typischerweise direkt proportional zur Werstückhöhe und umgekehrt proportional zur Drahtlaufgeschwindigkeit ist, also beispielsweise bei einer Werkstückhöhe von 50 mm und einer Vorschubgeschwindigkeit von 100 mm/s 0,5 Sekunden beträgt. Eine Befreiung gelingt am ehesten durch die Bewegung vom Kurzschlußpunkt K zum Maßnahmenpunkt M.

Es sind auch Drahtreinigungs- und Drahtausricht-Vorrichtungen bekannt, welche og Drahtfehler wenigstens mildern können. In diesen Vorrichtungen werden für die Reinigung hauptsächlich Ziehsteine, Bürsten und/oder Filze und für das Ausrichten Glüh- und/oder Zieh-Streckeinrichtungen verwendet. Ein Ein-Aus-Schalten, d.h. Aktivieren und Deaktivieren dieser Vorrichtungen dient bevorzugt zum Erfassen der Störungsursache. Damit hat man die Möglichkeit, Gegenmaßnahmen zu ergreifen oder dem Operateur entsprechende Vorschläge zu machen, etwa an ihn zu melden: "Schlechte Drahtqualität - Spule auswechseln!"

Drahtmaterial-Ablagerungen auf den reibungsbehafteten Zonen des Drahtlaufweges, etwa an den Stromkontakten oder den Drahtführungen, können sich mit dem Draht verschweißen, und dann in die Bearbeitungszone gezogen werden. Diese Phänomene wirken sich ähnlich wie mangelhafte Drahtqualität aus. Hierdurch hervorgerufene Kurzschlüsse fallen aber bedeutend kürzer aus und können durch eine vorübergehende starke Erhöhung der Drahtlaufgeschwindigkeit anhaltend bereinigt werden. Luftblasen und Gasblasen erzeugen infolge verschlechterter Drahtkühlung Kurzschlüsse, welche nur etwa 1 ms bis 100 ms dauern. Diese Art Kurzschlüsse kann am ehesten durch Unterbrechung der Bearbeitungsimpulse beseitigt werden, weil dabei genügend Zeit für die Abkühlung der Drahtelektrode gegeben ist.

Alle vorgenannten Kurzschlußfälle korrelieren kaum mit der Bahngeometrie. Es gibt aber auch Kurzschlußursachen mit klarem Geometriebezug. So treten zum Beispiel Konturfehler der vorhergehenden Schnitte besonders in scharfen Ecken auf. Auch Werkstückverlagerungen infolge freigesetzter Materialspannungen wirken sich am meisten an und nach Ecken der Bahnkontur aus. Diese Kurzschlußfälle kann man nur reduzieren, indem man Eingriffe auf die Vorschubgeschwindigkeit V, auf die Reglervorgaben für die Servogeschwindigkeit S oder gar auf den Offsetwert der Nachschnittbahn 6 vornimmt.

Weiter gibt es Kurzschlußfälle, welche auf reine Wartungsfehler zurückzuführen sind. Darunter fallen etwa verschlissene Stromkontakte oder defekte Transportbänder für die Drahtelektrode 1, defekte Drahtzerkleinerungs-Vorrichtungen und verschmutzte Filtereinrichtungen für das Spülmittel. Auch diese Kurzschlußfälle weisen charakteristische Erscheinungsbilder in Form von Dauer, zyklischem Auftreten oder erfolglosen Befreiungsmaßnahmen auf. Diese Fälle können vom System her nicht bereinigt werden. Es bleibt nur die Möglichkeit, die Bearbeitung zu unterbrechen und den Operator auf die auszuführende Wartungsarbeit hinzuweisen.

Vorstehende Ausführungen sollen die komplexen Zusammenhänge und Ursachen von Kurzschlüssen beim funkenerosiven Feinbearbeiten aufzeigen. Es kann einem Operator nicht zugemutet werden, die notwendigen Gegenmaßnahmen sofort zu erkennen oder gar den Prozeß ständig zu beobachten. Dies ist vielmehr Aufgabe des Verfahrens und der Vorrichtung gemäß der Erfindung. Hierzu werden in Testläufen gemachte Erfahrungen und/oder Spezialistenwissen in Form von Standard-Maßnahmensets berücksichtigt oder in das System einprogrammiert. Außerdem wird es befähigt, anhand selbst gemachter Erfahrungen zu lernen und damit intelligenter und flexibler zu reagieren.

Dazu ist es notwendig, die Maßnahmengeschichte und besonders deren Resultate abzuspeichern, zum Beispiel die Erfolgsquote einer Maßnahme, also etwa folgende Information: Wieviele der letzten n Versuche einer Maßnahme waren erfolgreich.

Vorteilhaft ist auch die Abspeicherung folgender Quotienten: Kurzschlußanzahl zu zurückgelegter Wegstrecke des Vorschubes oder Kurzschlußfrequenz zu Bahnkrümmung; oder die Abspeicherung der Kurzschlußfrequenz selbst; weiterhin die Berücksichtigung einer Statistik von z. B. 3 Klassen von Kurzschlußdauern: 0 - 10 ms, 11 - 100 ms und größer als 100 ms.

Daraus baut sich automatisch bei jeder Bearbeitung eine Wissensbasis auf, welche es erlaubt, die Eingriffsstrategie, d.h. die Kurzschluß-Intervention anhand vorgegebener Regeln anzupassen.

In einem ersten Schritt kann man in der Regel nur Symptombekämpfung in Form von Maßnahmen zur Kurzschlußbefreiung nach Standardmuster betreiben. Beispielsweise eignet sich eine Bewegung vom Maßnahmenpunkt M zum Haltepunkt H und zurück, um geometriebedingte Kurzschlüsse zu beheben. Eine Bewegung vom Maßnahmenpunkt M zum Reinigungspunkt R und zurück, insbesondere in Kombination mit einem Spülmittelimpuls, ergibt sehr gute Resultate bei Kurzschlüssen infolge von Ablagerungen im Schnittspalt 4. Die Zone vor dem Kurzschlußpunkt K wird damit gesäubert. Ein Polaritätswechsel der Bearbeitungsimpulse während einer bestimmten Zeitdauer ermöglicht eine sehr schnelle Kurzschlußbefreiung bei schlechter Drahtqualität. Etwaige Überhöhungen (Vorsprünge) der Drahtelektroden-Oberfläche werden dabei bevorzugt abgetragen.

Mit steigender Wissensbasis wird es dann möglich, die effektiveren Maßnahmen zu bevorzugen und zu kombinieren. Nach einer gewissen Zeit ist es möglich, aus dem Muster der Erfolgsquoten und der verschiedenen Quotienten auf eine oder sogar mehrere Ursachen zu schließen.

Dies ermöglicht es wiederum, Maßnahmen zur Ursachenbeseitigung zu ergreifen, um die Kurzschlußhäufigkeit herabzusetzen. Da es sich bei den Prozeßstörungen nicht um statische Vorgänge handelt, werden diese Maßnahmen nach einer festgesetzten Zeitspanne wieder zurückgenommen. Ein Andauern der Störungen würde sich in der Wissensbasis erneut niederschlagen, und einen neuen Zyklus auslösen. Da die Wissensbasis für die entsprechende Prozeßstörung schon aufgebaut ist, erfolgt im Wiederholungsfall der Eingriff mit bedeutend verkürzter Reaktionszeit. - Es ist natürlich wichtig, nur Maßnahmen zuzulassen, welche weder die Formtreue noch die Oberflächenqualität der Werkstückes 2 schädigen.

Diese Art intelligenter Regelung läßt sich gut mit unscharfer Logik (Fuzzylogik) realisieren. Die Erfolgsquoten und verschiedenen Quotienten sowie eventuell deren Gradienten nach der Zeit werden dabei jeweils einer vom Spezialisten definierten Zugehörigkeitsfunktion und anschließend einer Regelbasis zugeleitet. Nach einer Ausgangstransformation erhält man dann die erwünschten Anpassungen der Interventions-Maßnahmen. Der große Vorteil der unscharfen Logik ist, daß man dem System sozusagen wörtlich, mit sogenannten linguistischen Variablen, mitteilen kann, wie es sich verhalten soll. Dies ist im Gegensatz zu rein mathematischen Anweisungen oder logischen Verknüpfungsanweisungen eine bedeutende Erleichterung, umso mehr, als hier sehr komplexe Verhältnisse herrschen.

Bei der Anwendung dieser Systeme gibt es grundsätzlich zwei Möglichkeiten. Entweder werden die Systeme bereits vom Hersteller auf alle möglichen Anwendungsfälle durch überwachtes Lernen trainiert, sodann das hierdurch erworbene Wissen in einem Speicher abgelegt und dann für den Anwender dupliziert, also mit Langzeitgedächtnis ausgestattet; oder man gibt den Systemen nur Verhaltensregeln mit und läßt sie für jeden Anwendungsfall neu lernen, welche Maßnahmen zu treffen sind. Die zweite Variante mit nicht überwachtem Lernen und Kurzzeitgedächtnis hat im vorliegenden Fall große Vorteile und ist für zukünftige, heute noch nicht bekannte Anwendungen ebenfalls brauchbar.

Zum Umgang mit Fuzzylogik sei auf das Buch von C. Altrock "Fuzzy logic Technologie", Oldenburg Verlag 1993, ISBN 3-486-22673-8 verwiesen. Folgende "Softwarewerkzeuge" sind in den Manuals der Firma INFORM GmbH, Aachen, Deutschland dokumentiert: "Fuzzy TECH 3.o Neuro Fuzzy Module", "Fuzzy TECH 3.0 Online Edition". Diese Tools sind bestens geeignet, die hier beschriebenen Regelalgorithmen zu realisieren.

## Patentansprüche

1. Verfahren zum funkenerosiven Nachschneiden eines Werkstückes (2) mittels drahtförmiger Elektrode (1), bei welchem
a) ständig mindestens ein Spaltparameter zur Erkennung einer Kurzschlußsituation überwacht wird, dadurch gekennzeichnet, daß
b) bei Erkennen eines Kurzschlusses die Vorschubbewegung der Elektrode (1) im Kurzschlußpunkt (K) angehalten wird;
c) bei Fortdauern des Kurzschlusses die Elektrode (1) quer zur Nachschnittbahn (6) vom Werkstück (2) weg bis zu einem Maßnahmenpunkt (M) bewegt wird;
d) im Maßnahmenpunkt (M) eine oder mehrere Maßnahmen zur Kurzschlußbefreiung ein- oder mehrmals durchgeführt werden; und
e) bei Festellen einer Kurzschlußbefreiung die Elektrode (1) wieder zum Kurzschlußpunkt (K) zurückbewegt und die normale Bearbeitung fortgeführt wird.

2. Verfahren nach Anspruch 1, dadurch gekennzeichnet, daß im Maßnahmepunkt (M) ein Spülmittelimpuls erhöhten Druckes und/oder Durchflusses ausgelöst wird.

3. Verfahren nach Anspruch 1, dadurch gekennzeichnet, daß im Maßnahmepunkt (M) ein Stromimpuls erhöhter Amplitude zur Aufschmelzung des Kurzschlusses ausgelöst wird.

4. Verfahren nach Anspruch 1, dadurch gekennzeichnet, daß im Maßnahmepunkt (M) die Drahtelektrode (1) parallel zur Nachschnittbahn (6) vom Maßnahmenpunkt (M) zurück zu einem Haltepunkt (H) und von dort wieder vorwärts zum Maßnahmenpunkt (M) bewegt wird.

5. Verfahren nach Anspruch 1, dadurch gekennzeichnet, daß im Maßnahmenpunkt (M) die Spannkraft und/oder die Laufgeschwindigkeit des Drahtes (1) für eine vorgegebene Zeitspanne lang erhöht werden.

6. Verfahren nach Anspruch 1, dadurch gekennzeichnet, daß im Maßnahmenpunkt (M) die Bearbeitungsimpulse für eine vorgegebene Zeitspanne lang gestoppt werden.

7. Verfahren nach einem der vorhergehenden Ansprüche, dadurch gekennzeichnet, daß im Maßnahmenpunkt (M) die Polarität der Bearbeitungsimpulse für eine vorgegebene Zeitspanne lang umgekehrt wird.

8. Verfahren nach Anspruch 1, dadurch gekennzeichnet, daß im Maßnahmenpunkt (M) die Drahtelektrode (1) vom Maßnahmenpunkt (M) parallel zur Nachschnittbahn (6) vorwärts zum Reinigungspunkt (R) und von dort wieder zurück zum Maßnahmenpunkt (M) bewegt wird.

9. Verfahren nach einem der Ansprüche 1, 4 oder 8, dadurch gekennzeichnet, daß als Wegstrecke zwischen dem Kurzschlußpunkt (K) und Maßnahmenpunkt (M), dem Maßnahmenpunkt (M) und dem Haltepunkt (H) und/oder dem Maßnahmenpunkt (M) und Reinigungspunkt (R) eine veränderbare, insbesondere programmierbare Größe gewählt wird.

10. Verfahren nach einem der Ansprüche 1, 4, 8 oder 9, dadurch gekennzeichnet, daß der Maßnahmenpunkt (M), der Haltepunkt (H) und/oder der Reinigungspunkt (R) auf die Vollschnittbahn (5) gelegt werden.

11. Verfahren nach einem der vorstehenden Ansprüche, dadurch gekennzeichnet, daß die Maßnahmen zur Kurzschlußbefreiung einzeln oder in bestimmten Kombinationen und/oder als bestimmte Sequenz oder Teilsequenz vorgewählt werden.

12. Verfahren nach einem der vorstehenden Ansprüche, dadurch gekennzeichnet, daß
a) mit einer bestimmten Kombination und/oder Sequenz der Maßnahmen zur Kurzschlußbefreiung gestartet wird;
b) die Erfolgsquoten anhand der Kurzschlußdauer und/oder Anzahl der erfolgreichen Befreiungen ermittelt und abgespeichert wird;
c) die Sequenz und/oder Kombination entsprechend den Erfolgsquoten geordnet wird; und
d) bei nachfolgenden Kurzschlußfällen nach dieser neuen Ordnung Maßnahmen zur Kurzschlußbefreiung ergriffen werden.

13. Verfahren nach einem der vorstehenden Ansprüche, dadurch gekennzeichnet, daß aus der Verteilung der Erfolgsquoten der verschiedenen Maßnahmen zur Kurzschlußbefreiung die wahrscheinlichsten Ursachen für die Kurzschlüsse ermittelt und aufgrund des Ermittlungsergebnisses Maßnahmen zur Ursachenbehebung ergriffen werden.

14. Verfahren nach Anspruch 13, dadurch gekennzeichnet, daß zur Ursachenbeseitigung die Vorschubgeschwindigkeit (V) geändert wird.

15. Verfahren nach Anspruch 13, dadurch gekennzeichnet, daß zur Ursachenbeseitigung die Reglervorgaben für die Servogeschwindigkeit (S) verändert wird.

16. Verfahren nach Anspruch 13, dadurch gekennzeichnet, daß zur Ursachenbeseitigung der Offsetwert der Nachschnittbahn (6) geändert wird.

17. Verfahren nach Anspruch 13, dadurch gekennzeichnet, daß zur Ursachenbeseitigung die Drahtspannkraft und/oder die Drahtlaufgeschwindigkeit geändert wird.

18. Verfahren nach Anspruch 13, dadurch gekennzeichnet, daß zur Ursachenbeseitigung der Spülmitteldruck und/oder Spülmitteldurchfluß geändert wird.

19. Verfahren nach Anspruch 13, dadurch gekennzeichnet, daß zur Ursachenbeseitigung eine Drahtreinigungsvorrichtung und/oder eine Drahtrichtvorrichtung aktiviert wird.

20. Verfahren nach Anspruch 13, dadurch gekennzeichnet, daß zur Ursachenbeseitigung die Erosionsbearbeitung unterbrochen und die Funkenerosionsmaschine entsprechend den detektierten Ursachen gewartet wird.

21. Funkenerosionsmaschine zum funkenerosiven Nachschneiden eines Werkstückes (2) mittels einer drahtförmigen Elektrode (1), insbesondere zur Durchführung des Verfahrens nach Anspruch 1, mit
a) Mitteln zum ständigen Überwachen mindestens eines Spaltparameters zur Erkennung einer Kurzschlußsituation,
gekennzeichnet durch,
b) eine mit den Überwachungsmitteln verbundene Steuerung, die derart ausgelegt ist, daß sie:
b.1) bei Erhalt eines einen Kurzschluß anzeigenden Ausgangssignals der Überwachungsmittel die Vorschubbewegung der Elektrode (1) im Kurzschlußpunkt (K) anhält;
b.2) bei Fortdauern des Kurzschlusses die Elektrode (1) quer zur Nachschnittbahn (6) vom Werkstück (2) weg bis zu einem Maßnahmenpunkt (M) bewegt;
b.3) im Maßnahmenpunkt (M) eine odere mehrere Maßnahmen zur Kurzschlußbefreiung ein- oder mehrmals durchführt; und
b.4) nach Erhalt eines eine Kurzschlußbefreiung anzeigenden Signales die Elektrode (1) wieder zum Kurzschlußpunkt (K) zurückführt und die normale Bearbeitung fortführt.

22. Funkenerosionsmaschine nach Anspruch 20, insbesondere zur Durchführung des Verfahrens nach einem der Ansprüche 2 bis 12, dadurch gekennzeichnet, daß die Steuerung mit einem derartigen ersten Algorithmus programmiert ist, daß sie
a) bei Kurzschluß eine bestimmte Kombination und/oder Sequenz der in den Ansprüchen 2 bis 8 genannten Maßnahmen zur Kurzschlußbefreiung auslöst;
b) die hierdurch erzielten Erfolgsquoten anhand der Kurzschlußdauer und/oder der erfolgten Kurzschlußbefreiungen ermittelt;
c) die Sequenz und/oder Kombination entsprechend den ermittelten Erfolgsquoten ordnet; und
d) bei nachfolgenden Kurzschlußfällen nach dieser neuen Ordnung Maßnahmen zur Kurzschlußbefreiung veranlaßt.

23. Funkenerosionsmaschine nach Anspruch 21 oder 22, insbesondere zur Durchführung des Verfahrens nach einem der Ansprüche 13 bis 20, dadurch gekennzeichnet, daß die Steuerung mit einem zweiten Algorithmus zur Mustererkennung programmiert ist, welcher aus der Verteilung der Erfolgsquoten der verschiedenen Maßnahmen zur Kurzschlußbefreiung die wahrscheinlichsten Ursachen für die Kurzschlüsse ermittelt und aufgrund des Ermittlungsergebnisses das Vorhandensein von Kurzschlüssen und deren wahrscheinlichsten Ursachen anzeigt.

24. Funkenerosionsmaschine nach Anspruch 23, dadurch gekennzeichnet, daß der zweite Algorithmus derart ausgestaltet ist, daß er Empfehlungen zur Behebung der Kurzschlußursachen anzeigt.

25. Funkenerosionsmaschine nach Anspruch 23 oder 24, dadurch gekennzeichnet, daß die Steuerung mit einem dritten Algorithmus programmiert ist, welcher die Kurzschlußhäufigkeit anhand der Resultate des zweiten Algorithmus ermittelt, bei oberhalb eines ersten Grenzwertes liegender Kurzschlußhäufigkeit die Steuerung eine oder mehrere Maßnahmen zur Ursachenbeseitigung auslöst und nach einer vorgegebenen Zeitdauer und/oder nach Unterschreiten eines zweiten Grenzwertes der Kurzschlußhäufigkeit vorstehende Maßnahmen wieder rückgängig macht.

26. Funkenerosionsmaschine nach Anspruch 25, insbesondere zur Durchführung des Verfahrens nach Anspruch 16, dadurch gekennzeichnet, daß die Steuerung bei Vorliegen eines Kurzschlusses ein Quer-Servosystem zur Anpassung des Offset-Wertes der Nachschnittbahn (6) ansteuert.

27. Funkenerosionsmaschine nach einem der Ansprüche 22 bis 26, dadurch gekennzeichnet, daß die ersten, zweiten und/oder dritten Algorithmen für unscharfe Logik ausgelegt sind.

## Claims

1. Method for recutting a work piece (2) by electrical discharge machining by means of a wire-like Electrode (1), in which
a) at least one gap parameter is constantly monitored to detect a short-circuit situation, characterised in that
b) on detection of a short circuit the advance movement of the electrode (1) is stopped at the short-circuit point (K);
c) if the short circuit persists the electrode (1) is moved transversely to the recutting path (6) away from the work piece as far as a procedure point (M);
d) at the procedure point (M) one or more procedures are carried out one or more times to eliminate the short circuit; and
e) on detection of elimination of the short circuit the electrode (1) is again moved back to the short-circuit point (K) and normal machining is continued.

2. Method according to claim 1, characterised in that at the procedure point (M) a flushing agent pulse of elevated pressure and/or throughflow is triggered.

3. Method according to claim 1, characterised in that at the procedure point (M) a current pulse of elevated amplitude is triggered to melt the short circuit open.

4. Method according to claim 1, characterised in that at the procedure point (M) the wire electrode (1) is moved parallel to the recutting path 16) from the procedure point (M) back to a holding point (H) and from there forwards again to the procedure point (M).

5. Method according to claim 1, characterised in that at the procedure point (M) the tension and/or the speed of travel of the wire (1) are increased for a given length of time.

6. Method according to claim 1, characterised in that at the procedure point (M) the machining pulses are stopped for a given length of time.

7. Method according to any of the preceding claims, characterised in that at the procedure point (M) the polarity of the machining pulses is reversed for a given length of time.

8. Method according to claim 1, characterised in that at the procedure point (M) the wire electrode (1) is moved from the procedure point (M) parallel to the recutting path (6) forwards to the cleaning point (R) and from there back again to the procedure point (M).

9. Method according to any of claims 1, 4 or 8, characterised in that a variable, particularly programmable quantity is selected as the distance between the short-circuit point (K) and procedure point (M), the procedure point (M) and the holding point (H) and/or the procedure point (M) and cleaning point (R).

10. Method according to any of claims 1, 4, 8 or 9, characterised in that the procedure point (M), the holding point (H) and/or the cleaning point (R) are placed on the full-width cutting path (5).

11. Method according to any of the preceding claims, characterised in that the procedures for short circuit elimination are preselected individually or in given combinations and/or as a given sequence or partial sequence.

12. Method according to any of the preceding claims, characterised in that
a) the method is begun with a given combination and/or sequence of procedures for short circuit elimination;
b) the success quotas are determined with the aid of the short-circuit time and/or number of successful eliminations and stored;
c) the sequence and/or combination is put in order according to the success quotas; and
d) for successive short circuit cases, procedures for short circuit elimination are adopted according to this new order.

13. Method according to any of the preceding claims, characterised in that, from the distribution of success quotas of the various procedures for short circuit elimination, the most probable causes of the short circuits are determined, and procedures to eliminate the causes are adopted on the basis of the result of determination.

14. Method according to claim 13, characterised in that, to eliminate the causes, the rate of advance (V) is varied.

15. Method according to claim 13, characterised in that, to eliminate the causes, the regulator standards for the servo speed (S) is varied.

16. Method according to claim 13, characterised in that, to eliminate the causes, the offset value of the recutting path (6) is varied.

17. Method according to claim 13, characterised in that, to eliminate the causes, the wire tension and/or the speed of wire travel is varied.

18. Method according to claim 13, characterised in that, to eliminate the causes, the flushing agent pressure and/or flushing agent throughflow is varied.

19. Method according to claim 13, characterised in that, to eliminate the causes, a wire cleaning device and/or a wire straightening device is activated.

20. Method according to claim 13, characterised in that, to eliminate the causes, machining by erosion is interrupted and the electrical discharge machine is serviced according to the detected causes.

21. Electrical discharge machine for recutting a work piece (2) by electrical discharge machining by means of a wire-like electrode (1), in particular for carrying out the method according to claim 1, with
a) Means for constantly monitoring at least one gag parameter to detect a short-circuit situation,
characterized by
b) a control system which is connected to the monitoring means and which is designed in such a way that it:
b.1) on receiving an output signal from the monitoring means indicating a short circuit, stops the advance movement of the electrode (1) at the short-circuit point (K);
b.2) if the short circuit persists, moves the electrode (1) transversely to the recutting path (6) away from the work piece (2) as far as a procedure point (M);
b.3) at the procedure point (M) carries out one or more procedures one or more times to eliminate the short circuit; and
b.4) on receiving a signal indicating elimination of the short circuit, moves the electrode (1) back to the short-circuit point (K) again and continues normal machining.

22. Electrical discharge machine according to claim 20, in particular for carrying out the method according to any of claims 2 to 12, characterised in that the control system is programmed with a first algorithm such that it
a) in case of a short circuit triggers a given combination and/or sequence of the procedures for short circuit elimination mentioned in claims 2 to 8;
b) determines the success quotas obtained by this means with the aid of the short-circuit time and/or the short circuit eliminations that have taken place;
c) puts the sequence and/or combination in order according to the success quotas determined; and
d) for successive short circuit cases, instigates procedures for short circuit elimination according to this new order.

23. Electrical discharge machine according to claim 21 or 22, in Particular for carrying out the method according to any of claims 13 to 20, characterised in that the control system is programmed with a second algorithm for pattern recognition which, from the distribution of success quotas of the various procedures for short circuit elimination, determines the most probable causes of the short circuits, and indicates the presence of short circuits and their most probable causes on the basis of the result or determination.

24. Electrical discharge machine according to claim 23, characterised in that the second algorithm is designed so as to indicate recommendations for eliminating the causes of short circuits.

25. Electrical discharge machine according to claim 23 or 24, characterised in that the control System is programmed with a third algorithm which determines the short-circuit frequency with the aid of the results of the second algorithm, and in case of a short-circuit frequency above a first limit value the control system triggers one or more procedures to eliminate the causes, and after a given period and/or after falling below a second limit value of snort-circuit frequency reverses the above procedures again.

26. Electrical discharge machine according to claim 25, in particular for carrying out the method according to claim 16, characterised in that if there is a short circuit the control system drives a transverse servo system to adapt the offset value of the recutting path (6).

27. Electrical discharge machine according to any of claims 22 to 26, characterised in that the first, second and/or third algorithms are designed for fuzzy logic.

## Revendications

1. Procédé pour la reprise de coupe par électro-érosion d'une pièce (2) au moyen d'une électrode filiforme (1), dans lequel
a) au moins un paramètre de fente est surveillé en permanence pour détecter une situation de court-circuit, caractérisé en ce que
b) en cas de détection d'un court-circuit, le mouvement d'avance de l'électrode (1) est arrêté au point de court-circuit (K) ;
c) si le court-circuit se prolonge l'électrode (1) est éloignée de la pièce (2) par un mouvement transversal à la trajectoire (6) de coupe de reprise, jusqu'à un point d'action (M) ;
d) au point d'action (M), une ou plusieurs actions pour la suppression du court-circuit est ou sont exécutée(s) une ou plusieurs fois ; et
e) lors de la constatation de la suppression du court-circuit, l'électrode (1) est ramenée en sens inverse jusqu'au point de court-circuit (K) et l'usinage normal est poursuivi.

2. Procédé selon la revendication 1, caractérisé en ce qu'au point d'action (M), une impulsion de fluide de nettoyage d'une pression et/ou d'un débit renforcé est déclenchée.

3. Procédé selon la revendication 1, caractérisé en ce qu'au point d'action (M) une impulsion de courant d'amplitude renforcée est déclenchée pour la fusion du court-circuit.

4. Procédé selon la revendication 1, caractérisé en ce qu'au point d'action (M), l'électrode en fil (1) est ramenée, par un mouvement parallèle à la trajectoire de la coupe de reprise (6), du point d'action (M) à un point d'arrêt (H) et, de là, elle est de nouveau déplacée vers l'avant jusqu'au point d'action (M).

5. Procédé selon la revendication 1, caractérisé en ce qu'au point d'action (M), la force de serrage et/ou la vitesse de défilement du fil (1) sont augmentées pour un laps de temps prédéterminé.

6. Procédé selon la revendication 1, caractérisé en ce qu'au point d'action (M), les impulsions d'usinage sont arrêtées pour un laps de temps prédéterminé.

7. Procédé selon une des revendications précédentes, caractérisé en ce qu'au point d'action (M), la polarité des impulsions d'usinage est inversée pour un laps de temps prédéterminé.

8. Procédé selon la revendication 1, caractérisé en ce qu'au point d'action (M), l'électrode en fil (1) est déplacée vers l'avant, à partir du point d'action (M) et parallèlement à la trajectoire (6) de coupe de reprise, jusqu'au point de nettoyage (R) et, de à, ramenée au point d'action (M).

9. Procédé selon une des revendications 1, 4 ou 8, caractérisé en ce que comme trajet entre le points de court-circuit (K) et le point d'action (M), entre le point d'action (M) et le point d'arrêt (H) et/ou entre le point d'action (M) et le point de nettoyage (R), une grandeur variable, en particulier programmable, est sélectionnée.

10. Procédé selon une des revendications 1, 4, 8 ou 9, caractérisé en ce que le point d'action (M), le point d'arrêt (H) et/ou le point de nettoyage (R) sont placés sur la trajectoire de pleine coupe (5).

11. Procédé selon une des revendications précédentes, caractérisé en ce que les actions pour la libération du court-circuit sont présélectionnées individuellement ou dans certaines combinaisons, et/ou sous la forme d'une séquence ou séquence partielle déterminée.

12. Procédé selon une des revendications précédentes, caractérisé en ce que :
a) il est démarré avec une combinaison et/ou séquence déterminée des actions pour la suppression du court-circuit ;
b) la note de réussite est déterminée sur la base de la durée du court-circuit et/ou du nombre des suppressions réussies et elle est mémorisée ;
c) la séquence et/ou la combinaison est ordonnée en fonction des notes de réussite ; et
d) en présence de cas de courts-circuits suivants les actions pour la suppression du court-circuit sont prises dans ce nouvel ordre.

13. Procédé selon une des revendications précédentes, caractérisé en ce que, sur la base de la distribution des notes de réussite des différentes actions pour la suppression des courts-circuits, les causes les plus vraisemblables des courts-circuits sont déterminées, et sur la base du résultat de la détermination, des actions sont prises pour la suppression des causes.

14. Procédé selon la revendication 13, caractérisé en ce que, pour l'élimination des causes, la vitesse d'avance (V) est modifiée.

15. Procédé selon la revendication 13, caractérisé en ce que, pour la suppression des causes, les spécifications du régulateur pour la vitesse asservie (S) sont modifiées.

16. Procédé selon la revendication 13, caractérisé en ce que, pour la suppression des causes, la valeur de déport de la trajectoire de coupe de reprise (6) est modifiée.

17. Procédé selon la revendication 13, caractérisé en ce que, pour la suppression des causes, la force de serrage du fil et/ou la vitesse de défilement du fil sont modifiées.

18. Procédé selon la revendication 13, caractérisé en ce que, pour la suppression des causes, la pression et/ou le débit du fluide de nettoyage sont modifiés.

19. Procédé selon la revendication 13, caractérisé en ce que, pour la suppression des causes, un dispositif de nettoyage du fil et/ou un dispositif de dressage du fil sont activés.

20. Procédé selon la revendication 13, caractérisé en ce que, pour la suppression des causes, l'usinage par érosion est interrompu et la machine d'électro-érosion subit une opération d'entretien correspondant aux causes détectées.

21. Machine d'électro-érosion pour la coupe de reprise par électro-érosion d'une pièce (2) au moyen d'une électrode filiforme (1), en particulier pour la mise en oeuvre du procédé selon la revendication 1, comprenant
a) des moyens pour la surveillance constante d'au moins un paramètre de fente, pour la détection d'une situation de court-circuit,
caractérisée par
b) une commande reliée aux moyens de surveillance, qui est conçue de manière que
b.1) à la réception d'un signal de sortie des moyens de surveillance signalant un court-circuit, le mouvement d'avance de l'électrode (1) soit arrêté au point de court-circuit (K)
b.2) en cas de prolongation du court-circuit, l'électrode (1) soit éloignée de la pièce (2) par un mouvement transversal à la trajectoire de coupe de reprise (6), jusqu'à un point d'action (M) ;
b.3) au point d'action (M), une ou plusieurs action(s) pour la suppression du court-circuit est ou sont exécutée(s) une ou plusieurs fois ; et
b.4) après la réception d'un signal signalant la suppression du court-circuit, l'électrode (1) est ramenée au point de court-circuit (K) et l'usinage normal est poursuivi.

22. Machine d'électro-érosion selon la revendication 20, en particulier pour la mise en oeuvre du procédé selon une des revendications 2 à 12, caractérisée en ce que la commande est programmée avec un premier algorithme qui est tel que
a) en présence d'un court-circuit elle exécute une combinaison et/ou séquence déterminée des actions citées dans les revendications 2 à 8 pour la suppression du court-circuit ;
b) les notes de réussite obtenues par ce moyen sont déterminées sur la base de la durée du court-circuit et/ou des suppressions de courts-circuits exécutées ;
c) la séquence et/ou combinaison est ordonnée selon les notes de réussite déterminées ; et
d) en présence de cas de court-circuit suivants, elle provoque des actions pour la suppression du court-circuit selon ce nouvel ordre.

23. Machine d'électro-érosion selon la revendication 21 ou 22, en particulier pour la mise en oeuvre du procédé selon une des revendications 13 à 20, caractérisée en ce que la commande est programmée avec un deuxième algorithme pour la reconnaissance d'un motif, qui, sur la base de la distribution des notes de réussite des différentes actions pour la suppression du court-circuit, détermine les causes les plus vraisemblables pour les courts-circuits et, sur la base du résultat de la détermination, il indique la présence de court-circuit et leurs causes les plus vraisemblables.

24. Machine d'électro-érosion selon la revendication 23, caractérisée en ce que le deuxième algorithme est conformé de telle manière qu'il indique des recommandations pour la suppression des causes de court-circuit.

25. Machine d'électro-érosion selon la revendication 23 ou 24, caractérisée en ce que la commande est programmée avec un troisième algorithme qui détermine la fréquence des courts-circuits en se basant sur les résultats du deuxième algorithme, et qui, en présence d'une fréquence de court-circuit située au-dessus d'une première valeur limite, la commande déclenche une ou plusieurs actions pour la suppression des causes et, après un laps de temps prédéterminé et/ou, après le passage au-dessous d'une deuxième valeur limite de la fréquence des courts-circuits, annule les actions ci-dessous.

26. Machine d'électro-érosion selon la revendication 25, en particulier pour la mise en oeuvre du procédé selon la revendication 16, caractérisée en ce que, en présence d'un court-circuit, la commande met en marche un servo-système transversal pour l'adaptation de la valeur de déport de la trajectoire de coupe de reprise (6).

27. Machine d'électro-érosion selon une des revendications 22 à 26, caractérisée en ce que le premier, le deuxième et/ou le troisième algorithme est conçu pour une logique floue.
